# EUROPÄISCHE PATENTANMELDUNG

(11) **EP 3 495 743 A1**
(43) Veröffentlichungstag der Anmeldung: **12.06.2019**
(21) Anmeldenummer: 18210758.1
(22) Anmeldetag: 06.12.2018
(51) Int. Cl.: F24D 3/14, B32B 5/06, B32B 5/26, B32B 17/02, F01N 1/24, F16L 57/04, F16L 59/02, F16L 59/14, E04F 15/18

(54) **DÄMMUNGSVORRICHTUNG FÜR EINE FLÄCHENTEMPERIERUNGSVORRICHTUNG UND FLÄCHENTEMPERIERUNGSVORRICHTUNG MIT EINER DÄMMUNGSVORRICHTUNG**

(30) Priorität: 07.12.2017 DE 202017107460 U
(71) Anmelder: herotec GmbH Flächenheizung, 59227 Ahlen (DE)
(72) Erfinder: HEUSER, Thomas, 59227 Ahlen/Vorhelm (DE); LAMMERING, Wilfried, 59227 Ahlen/Vorhelm (DE)
(74) Vertreter: dompatent von Kreisler Selting Werner - Partnerschaft von Patent- und Rechtsanwälten mbB

(57) **Zusammenfassung**

Die Dämmvorrichtung für eine Flächentemperierungsvorrichtung, insbesondere für eine Flächenheizung wie z.B. eine Fußbodenheizung, ist versehen mit mindestens einem Dämmelement (10;10'), auf dem temperierbare Leitungen der Flächentemperiervorrichtung verlegbar sind. Das mindestens eine Dämmelement (10;10') weist eine Dämmstoffschicht (12) aus brandhemmendem und insbesondere nicht brennbarem Wärme- und/oder Trittschall-Dämmmaterial aufund. Ferner weist das mindestens eine Dämmelement eine auf der Dämmstoffschicht (12) angeordnete Deckschicht auf, die mittels eines Fadenmaterials (18) mit der Dämmstoffschicht (12) vernäht und/oder mittels eines Fadenmaterials (18) an der Dämmstoffschicht (12) geheftet und/oder mittels eines Fadenmaterials mit der Dämmstoffschicht (12) durch Verdrillen und/oder Flechten verbunden ist. Die Deckschicht weist ein imprägniertes Gewebe (16) aus einem brandhemmenden und insbesondere nicht brennbaren Filamentmaterial auf.

## Beschreibung

Die Erfindung betrifft eine Dämmungsvorrichtung für eine Flächentemperierungsvorrichtung, insbesondere für eine Flächenheizung wie z.B. eine Fußbodenheizung. Ferner betrifft die Erfindung eine Flächentemperierungsvorrichtung mit einer zuvor genannten Dämmungsvorrichtung.

Die temperierbaren Leitungen von Flächentemperierungsvorrichtung wie beispielsweise Flächenheizungen oder Flächenkühlungen (nachfolgend Flächentemperierungsvorrichtung genannt) werden auf einer Isolier- bzw. Dämmungsvorrichtung verlegt, die aus einzelnen Dämmstoffelementen, beispielsweise in Platten- oder Mattenform verlegt sind. Die Dämmstoffelemente weisen eine Dämmstoffschicht aus einem wärme- oder trittschalldämmenden Material auf. Auf der Dämmstoffschicht befindet sich insbesondere dann, wenn die Dämmstoffschicht aus Fasermaterial besteht, eine Deckschicht, auf der dann die temperierbaren Leitungen liegen. Temperierbare Leitungen sind beispielsweise Elektrokabel oder typischerweise ein Temperiermedium wie beispielsweise Wasser führende Rohre.

Aus DE-U-20 2016 107 044 ist eine Dämmungsvorrichtung für eine Flächentemperierungsvorrichtung bekannt, bei der auf einer Dämmstoffschicht eine Deckschicht aus einem Vlies, und insbesondere aus Glasvlies aufgebracht ist. Die Vliesschicht ermöglicht es, auf der Deckschicht verlegte Rohre per KlettVerschlusssystem zu fixieren.

Aus DE-U-20 2015 100 914 ist ein ähnliches System wie zuvor beschrieben bekannt, wobei die Deckschicht Gewebematerial aufweisen kann. Allerdings wird in diesem Dokument nicht erwähnt, aus welchem Fasermaterial das Gewebe bestehen soll.

In DE-U-20 2015 102 823 und DE-U-20 2008 001 296 sind weitere Ausgestaltungen von Dämmstoffmatten für Flächentemperierungsvorrichtungen beschrieben.

Schließlich ist in DE-U-10 2014 105 276 ein Fußbodendämmelement beschrieben, bei dem die Deckschicht mit der Dämmstoffschicht vernäht ist.

Aufgabe der Erfindung ist es, eine brandhemmende und insbesondere nicht brennbare Dämmungsvorrichtung für eine Flächentemperierungsvorrichtung zu schaffen, bei der die temperierbaren Leitungen mittels krampenartiger Niederhalteelemente mit Widerhaken verlegbar sind.

Zur Lösung dieser Aufgabe wird mit der Erfindung eine Dämmungsvorrichtung für eine Flächentemperierungsvorrichtung, insbesondere für eine Flächenheizung wie z.B. eine Fußbodenheizung vorgeschlagen, wobei die Dämmungsvorrichtung versehen ist mit
- mindestens einem Dämmelement, auf dem temperierbare Leitungen der Flächentemperiervorrichtung verlegbar sind,
- wobei das mindestens eine Dämmelement aufweist
   - eine Dämmstoffschicht aus brandhemmendem und insbesondere nicht brennbarem Wärme- und/oder Trittschall-Dämmmaterial und
   - eine auf der Dämmstoffschicht angeordnete Deckschicht, die mittels eines Fadenmaterials mit der Dämmstoffschicht vernäht und/oder mittels eines Fadenmaterials an der Dämmstoffschicht geheftet und/oder mittels eines Fadenmaterials mit der Dämmstoffschicht durch Verdrillen und/oder Flechten verbunden ist,
   - wobei die Deckschicht ein imprägniertes Gewebe aus einem brandhemmenden und insbesondere nicht brennbaren Filamentmaterial und insbesondere ein imprägniertes derartiges Gewebe aufweist.

Bei der erfindungsgemäßen Dämmungsvorrichtung weist das mindestens eine Dämmelement eine Dämmstoffschicht aus brandhemmendem und insbesondere nicht brennbarem Wärme- und/oder Trittschall-Dämmmaterial auf, bei dem es sich vorzugsweise um Fasermaterial handelt. Will man in ein derartiges Dämmmaterial die sogenannten Tackernadeln, also die krampenartigen Niederhalteelemente mit Widerhaken zur Befestigung der temperierbaren Leitungen verwenden, so bereitet der Halt dieser Niederhalteelemente auf Grund der Faserstruktur des Dämmmaterials Schwierigkeiten. Zu diesem Zweck deckt man das Fasermaterial mit einer Deckschicht ab, die erfindungsgemäß als Gewebe aus Rovings, d.h. Bündeln aus brandhemmenden und insbesondere nicht brennbaren Filamenten besteht. Das erfindungsgemäße brandhemmende bzw. nicht brennbare Gewebe ist vorzugsweise imprägniert. Die Deckschicht ist erfindungsgemäß mit der Dämmstoffschicht durch Fadenmaterial verbunden, und zwar vernäht, geheftet, verdrillt oder verflochten. Das Fadenmaterial braucht nicht notwendigerweise selbst brandhemmend bzw. nicht brennbar zu sein, um das gesamte Dämmelement als brandhemmend bzw. nicht brennbar bezeichnen zu können. Der kalorimetrische Wert des Fadenmaterials ist auf Grund der geringen Menge, bezogen auf das gesamte Dämmelement, unkritisch. Die Oberseite der Gewebe-Deckschicht kann längs des oberseitig verlaufenden Fadenmaterials mittels beispielsweise eines Klebers versiegelt sein, um zu verhindern, dass durch die Einstiche in der Gewebe-Deckschicht Feuchtigkeit eindringen kann, die sich beispielsweise in Baumaterialien wie Mörtel, Estrich odgl. als Folge des Anmachwassers ergibt. Zur weiteren Erhöhung der "Wasserdichtigkeit" der Gewebe-Deckschicht kann diese entsprechend imprägniert sein. Dadurch werden die Zwischenräume zwischen den verwebten Gewebefäden "dicht gemacht".

Die Verwendung eines Gewebes als obere Lage des Dämmelements bewirkt, dass die Widerhaken der Tackernadeln, die durch das Gewebe getrieben werden, unterseitig des Gewebes gegen eine Zurückbewegung durch das Gewebe gehalten werden. Die Gewebelage ist brandhemmend bzw. nicht brennbar. Die Dämmstoffschicht ist brandhemmend bzw. nicht brennbar, so dass damit erfindungsgemäß ein brandhemmendes bzw. nicht brennbares Dämmelement geschaffen ist, und zwar für Flächentemperierungsvorrichtungen, bei denen die temperierbaren Leitungen "getackert" werden können.

Die Imprägnierung des Gewebes der Deckschicht des Dämmelements bewirkt eine Dichtigkeit gegenüber dem (Anmach-)Wasser, Mörtel bzw. Estrich o.dgl. Gemisch von üblicherweise bei Flächentemperierungsvorrichtungen eingesetzten Baumaterialien. Die durch das Gewebe getriebenen Tackernadeln verursachen keine zusätzlichen Undichtigkeiten. Die Dichtigkeit entsteht, sofern das Gewebe infolge seiner Imprägnierung nicht vollständig "wasserdicht" sein sollte, durch Zusetzen gegebenenfalls noch vorhandener kleine Öffnungen im Gewebe mittels der Partikel des mit Wasser angemachten Baumaterials wie Mörtel bzw. Estrich o.dgl.

Wie bereits oben erwähnt, kann das Dämmmaterial Fasermaterial aufweisen. Andere brandhemmende bzw. nicht brennbare Dämmmaterialien können ebenfalls eingesetzt werden. Auch an diese Materialien lässt sich erfindungsgemäß eine Gewebe-Deckschicht durch Fadenmaterial anbringen, und zwar durch Vernähen, Heften, Verdrillen oder Flechten. Vorzugsweise jedoch wird Fasermaterial als Dämmmaterial eingesetzt. Hier bieten sich insbesondere mineralische Fasern und vorzugsweise Mineralwolle, Glaswolle oder Steinwolle an.

Als Material für das Gewebe der Deckschicht kommen insbesondere Glas- oder Silikatfasern in Frage. Derartige Glasfasergewebematten, die imprägniert und damit für das oben beschriebene Gemisch aus Wasser und Baumaterial dicht sind, sind im Handel erhältlich und können für diesen Zweck eingesetzt werden.

In weiterer zweckmäßiger Ausgestaltung der Erfindung kann vorgesehen sein, dass die Deckschicht ferner an dem Gewebe mechanisch gehaltende Klettfasern zur Verhakung mit Klettelementen eines Klettverschlusssystems zur Fixierung von temperierbaren Leitungen der Flächentemperiervorrichtung an dem mindestens einen Dämmelement aufweist. Die Verbindung der Klettfasern mit dem Gewebe erfolgt mechanisch durch beispielsweise Verhaken, Verschlingen, Verankern o.dgl. Vorzugsweise wird hier kein Klebstoff verwendet, da dieser die heutzutage für Dämmungsvorrichtungen geforderten Eigenschaften, nämlich brandhemmend bzw. nicht brennbar, beeinträchtigen könnte. Die Klettfasern machen es möglich, die temperierbaren Leitungen von Flächentemperierungsvorrichtung auf der erfindungsgemäßen Dämmungsvorrichtung auch durch ein Klettverschlusssystem zu fixieren. Die Klettfasern bilden sozusagen die Schlaufen- bzw. Schlingenelemente eines Klettverschlusssystems, während die Außenseite einer temperierbaren Leitung dann mit den Klett-Hakenelementen des Klettverschlusssystems versehen sein kann. Ebenso könnte man aber auch quer über die zu verlegende temperierbare Leitung ein Materialstreifen mit Klett-Hakenelementen legen. Die "Schlingenschicht" kann als Vliesschicht (beispielsweise vernadelt) mit der Gewebeschicht verbunden sein. Schließlich können die Klettfasern auch durch "Aufrauen" der Oberseite des Gewebes gebildet und damit aus den Rovings des Gewebes herausgeführt sein.

Wie bereits oben erwähnt, wird die Deckschicht mittels Fadenmaterials mit der Dämmstoffschicht verbunden. Hierbei ist es von Vorteil, wenn das Fadenmaterial durch die Deckschicht bis in die Dämmstoffschicht und insbesondere vollständig durch diese, verläuft. Für die mechanische Verbindung der Gewebeschicht mit der Dämmstoffschicht können sämtliche Stichnahttypen verwenden werden, die in der Textilindustrie und insbesondere bei industriellen, technischen Textilien zum Verbinden zweier Materiallagen durch Vernähen bekannt sind. Insbesondere hat sich der Doppelkettenstich als Nahttyp als vorteilhaft herausgestellt.

Die erfindungsgemäße Dämmungsvorrichtung ist insbesondere frei von zusätzlichen Flammschutzmitteln o.dgl. flammhemmenden Mitteln. Vielmehr sorgt die Wahl der kalorimetrisch ins Gewicht fallenden Materialien des Dämmelements für die Brandhemmung bzw. die Nichtbrennbarkeit der erfindungsgemäßen Dämmungsvorrichtung.

Die obige Aufgabe wird darüber hinaus auch durch eine Flächentemperierungsvorrichtung, insbesondere Flächenheizung und vorzugsweise Fußbodenheizung gelöst, die mit einer Dämmungsvorrichtung gemäß einer der zuvor genannten Ausgestaltungen versehen ist, auf der wiederum eine temperierbare Leitung, insbesondere ein Temperiermedium führendes Rohr verlegt und fixiert ist. Dabei kann mit Vorteil, wie ebenfalls oben erwähnt, die temperierbare Leitung mittels eines Klettverschlusssystems und/oder mittels durch die Deckschicht bis in die Dämmstoffschicht getriebener krampenartiger Niederhalteelemente mit Widerhaken gehalten sein.

Die Erfindung wird nachfolgend anhand zweier Ausführungsbeispiele und unter Bezugnahme auf die Zeichnung näher erläutert. Im Einzelnen zeigen dabei:
- Fig. 1: eine perspektivische Ansicht eines Dämmelements einer Dämmungsvorrichtung für eine beispielsweise Fußbodenheizung mit auf dem Dämmelement verlegtem "getackerten" Heizungsrohr (angedeutet),
- Fig. 2: eine Darstellung zur Verdeutlichung der Verankerung der Tackernadeln unter dem Gewebe der Deckschicht des Dämmelements gemäß Fig. 1 und
- Fig. 3: eine alternative Ausgestaltung eines Dämmelements mit Klettverschlusssystem zur Fixierung eines Heizungsrohres einer beispielsweise Fußbodenheizung.

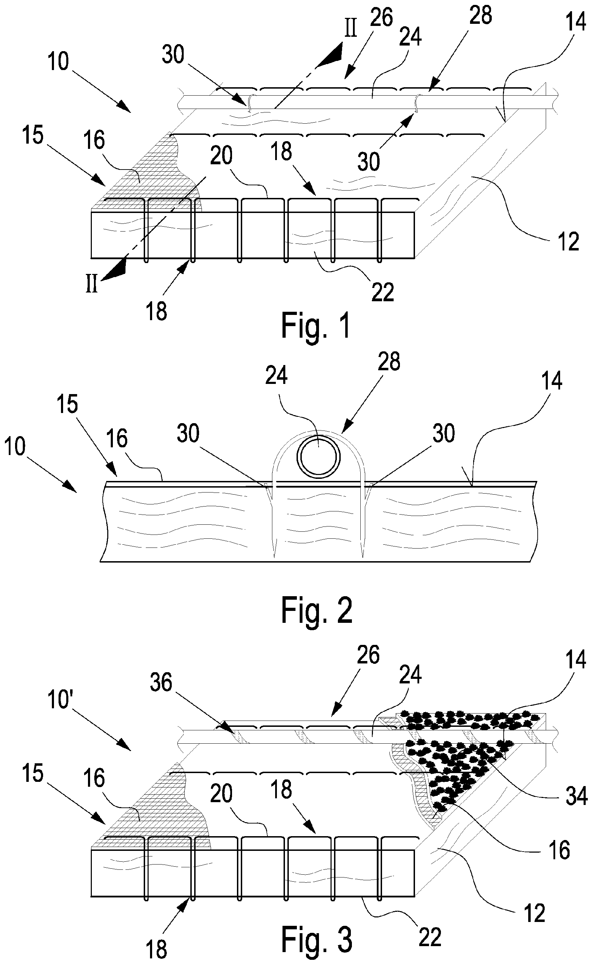

Fig. 1 zeigt perspektivisch ein Dämmelement 10 mit einer Dämmstoffschicht 12 aus einem faserigen Wärme- und/oder Trittschall-Dämmmaterial. Bei diesem Dämmmaterial handelt es sich beispielsweise um Mineralwolle, Glaswolle oder Steinwolle. Das Dämmmaterial ist vorzugsweise brandhemmend und insbesondere nicht brennbar.

Auf der Oberseite 14 der Dämmstoffschicht 12 befindet sich als Deckschicht 15 ein imprägniertes Gewebe 16 aus brandhemmenden und insbesondere nicht brennbaren Filamenten. Bei den Filamenten handelt es sich um Glasfilamente, so dass das Gewebe 16 ein imprägniertes Glasfasergewebe ist.

Das Gewebe 16 ist mit der Dämmstoffschicht 12 unter Verwendung von Fadenmaterial 18 für beispielsweise einen Oberfaden 20 und einen Unterfaden 22 einer Stichnaht vernäht. Alternativen zur Vernähung sind ein Verflechten, ein Heften oder auch ein Verdrillen mittels Fadenmaterials.

Das auf der Oberseite des Gewebes 16 verlaufende Fadenmaterial des Oberfadens 20 kann mit einem Abdichtmaterial (beispielsweise Kleber) überdeckt sein.

Auf einer Dämmungsvorrichtung, die mehrere Dämmelemente 10 gemäß Fig. 1 nebeneinanderliegend aufweist, lässt sich ein beispielsweise Warmwasser führendes Rohr 24 als temperierbare Leitung 26 verlegen und im Ausführungsbeispiel gemäß den Fign. 1 und 2 durch krampenartige Niederhalteelemente 28 mit Widerhaken 30 fixieren. Die durch das Gewebe 16 hindurch getriebenen Niederhalteelemente 28 "verfangen" sich mittels ihrer Widerhaken 30 an der Unterseite des Gewebes 16 und werden dadurch an einer Zurückbewegung gehindert, wodurch das Rohr 24 sicher gehalten ist. Anschließend wird zur Komplettierung der Fußbodenheizung Estrich o.dgl. Mörtelmaterial aufgetragen, um dann darauf den Oberboden herzustellen.

Der Vorteil des Dämmelements gemäß den Fign. 1 und 2 ist die Brandhemmung bzw. die Nichtbrennbarkeit bei gleichzeitiger "Tackerfähigkeit".

Alternativ bzw. zusätzlich können die Rohre 24 auch mittels eines Klettverschlusssystems auf dem Dämmelement fixiert sein. Diese alternative Ausgestaltung eines entsprechenden Dämmelements 10' ist in Fig. 3 gezeigt. Dabei gilt, dass Teile des Dämmelements 10' der Fig. 3, die konstruktionsgleich bzw. funktionsgleich mit den Teilen des Dämmelements 10 der Fign. 1 und 2 sind, in Fig. 3 mit den gleichen Bezugszeichen versehen sind wie in den Fign. 1 und 2.

Auf dem Gewebe 16 des Dämmelements 10' der Fig. 3 befindet sich im Gegensatz zum Dämmelement 10 noch eine Vliesschicht 32 aus einzelnen Klettfasern 34, die ebenfalls brandhemmend bzw. nicht brennbar sind. Diese Vliesschicht 32 ist mechanisch an dem Gewebe 16 gehalten, was beispielsweise durch die Vernähung erfolgt. Der Oberfaden 20 verläuft also oben auf der Vliesschicht 32, was in Fig. 3 angedeutet ist. Die von der Oberseite abstehenden Klettfasern 34 dienen der Verankerung mit Klett-Hakenelementen 36 am Rohr 24, wozu dieses beispielsweise spiralförmig mit einem Band mit Klett-Hakenelementen 36 umwickelt ist.

### BEZUGSZEICHENLISTE

- 10: Dämmelement
- 10': Dämmelement
- 12: Dämmstoffschicht
- 14: Oberseite der Dämmstoffschicht
- 15: Deckschicht
- 16: Gewebe
- 18: Fadenmaterial
- 20: Oberfaden
- 22: Unterfaden
- 24: Rohr
- 26: Leitung
- 28: Niederhalteelement
- 30: Widerhaken
- 32: Vliesschicht
- 34: Klettfaser
- 36: Klett-Hakenelement

## Patentansprüche

1. Dämmvorrichtung für eine Flächentemperierungsvorrichtung, insbesondere für eine Flächenheizung wie z.B. eine Fußbodenheizung, mit
- mindestens einem Dämmelement (10;10'), auf dem temperierbare Leitungen der Flächentemperiervorrichtung verlegbar sind,
- wobei das mindestens eine Dämmelement (10;10') aufweist
- eine Dämmstoffschicht (12) aus brandhemmendem und insbesondere nicht brennbarem Wärme- und/oder Trittschall-Dämmmaterial und
- eine auf der Dämmstoffschicht (12) angeordnete Deckschicht, die mittels eines Fadenmaterials (18) mit der Dämmstoffschicht (12) vernäht und/oder mittels eines Fadenmaterials (18) an der Dämmstoffschicht (12) geheftet und/oder mittels eines Fadenmaterials mit der Dämmstoffschicht (12) durch Verdrillen und/oder Flechten verbunden ist,
- wobei die Deckschicht ein imprägniertes Gewebe (16) aus einem brandhemmenden und insbesondere nicht brennbaren Filamentmaterial aufweist.

2. Dämmvorrichtung nach Anspruch 1, **dadurch gekennzeichnet, dass** das Wärme- und/oder Trittschall-Dämmmaterial mineralische Fasern, insbesondere Mineral-, Glas- oder Steinwolle aufweist.

3. Dämmvorrichtung nach Anspruch 1 oder 2, **dadurch gekennzeichnet, dass** das Gewebe (16) der Deckschicht ein Glasfasergewebe ist.

4. Dämmvorrichtung nach einem der Ansprüche 1 bis 3, **dadurch gekennzeichnet, dass** das die Deckschicht bildende Gewebe (16) imprägniert, so dass es damit bezüglich des bei Mörtel, Estrich odgl. Baumaterial verwendeten Anmachwassers dicht ist.

5. Dämmvorrichtung nach einem der Ansprüche 1 bis 4, **dadurch gekennzeichnet, dass** die Deckschicht ferner an dem Gewebe (16) mechanisch gehaltende Klettfasern (34) zur Verhakung mit Klettelementen eines Klettverschlusssystems zur Fixierung von temperierbaren Leitungen (26) der Flächentemperiervorrichtung an dem mindestens einen Dämmelement (10;10') aufweist.

6. Dämmvorrichtung nach Anspruch 5, **dadurch gekennzeichnet, dass** die Klettfasern (34) eine Vliesschicht (32) bilden, die mit dem Gewebe (16) mechanisch verbunden ist.

7. Dämmvorrichtung nach Anspruch 5, **dadurch gekennzeichnet, dass** die Klettfasern (34) aus Rovings des Gewebes (16) herausgeführt sind.

8. Dämmvorrichtung nach einem der Ansprüche 1 bis 7, **dadurch gekennzeichnet, dass** das Fadenmaterial (18) durch die Deckschicht und in die Dämmstoffschicht (12), insbesondere vollständig durch diese, verläuft.

9. Dämmvorrichtung nach einem der Ansprüche 1 bis 8, **dadurch gekennzeichnet, dass** das mindestens eine Dämmelement (10;10') frei von zusätzlichem Flammschutzmittel ist.

10. Flächentemperierungsvorrichtung, insbesondere Flächenheizung wie z.B. Fußbodenheizung, mit
- einer Dämmungsvorrichtung nach einem der vorhergehenden Ansprüche und
- mindestens einer temperierbaren Leitung (26), die auf dem mindestens einen Dämmelement (10;10') der Dämmungsvorrichtung verlegt und fixiert ist.

11. Flächentemperierungsvorrichtung nach Anspruch 10, **dadurch gekennzeichnet, dass** die temperierbare Leitung (26) mittels eines Klettverschlusssystems und/oder mittels durch die Deckschicht bis in die Dämmstoffschicht (12) getriebener krampenartiger Niederhalteelemente (28) mit Widerhaken (30) gehalten ist.
